# FASCICULE DE BREVET EUROPEEN

(11) **EP 2 352 661 B1**
(45) Date de publication et mention de la délivrance du brevet: **26.09.2012**
(21) Numéro de dépôt: 09797087.5
(22) Date de dépôt: 25.11.2009
(51) Int. Cl.: B60R 16/03, H02J 7/14, H02J 7/02

(54) **BOITIER D'INTERCONNEXION POUR VEHICULE AUTOMOBILE**
VERBINDUNGSGEHÄUSE FÜR EIN KRAFTFAHRZEUG
INTERCONNECTION HOUSING FOR MOTOR VEHICLE

(30) Priorité: 03.12.2008 FR 0806774
(43) Date de publication de la demande: 10.08.2011
(73) Titulaire: Renault S.A.S., 92100 Boulogne-Billancourt (FR)
(72) Inventeur: BRIANE, Benoît, F-75015 Paris (FR); LOUDOT, Serge, F-91190 Villiers-le-bacle (FR)
(74) Mandataire: Rougemont, Bernard
(86) Numéro de dépôt international: PCT/FR2009/052295
(87) Numéro de publication internationale: WO 2010/063921

(56) Documents cités:
- EP-A- 1 469 575
- EP-A- 1 870 978
- US-A- 5 581 171
- US-A1- 2007 188 130

## Description

L'invention concerne un boîtier d'interconnexion pour véhicule automobile, un dispositif de traction et un véhicule automobile en tant que tels incluant un tel boîtier d'interconnexion. Enfin, elle concerne aussi un procédé de recharge d'une batterie de véhicule automobile.

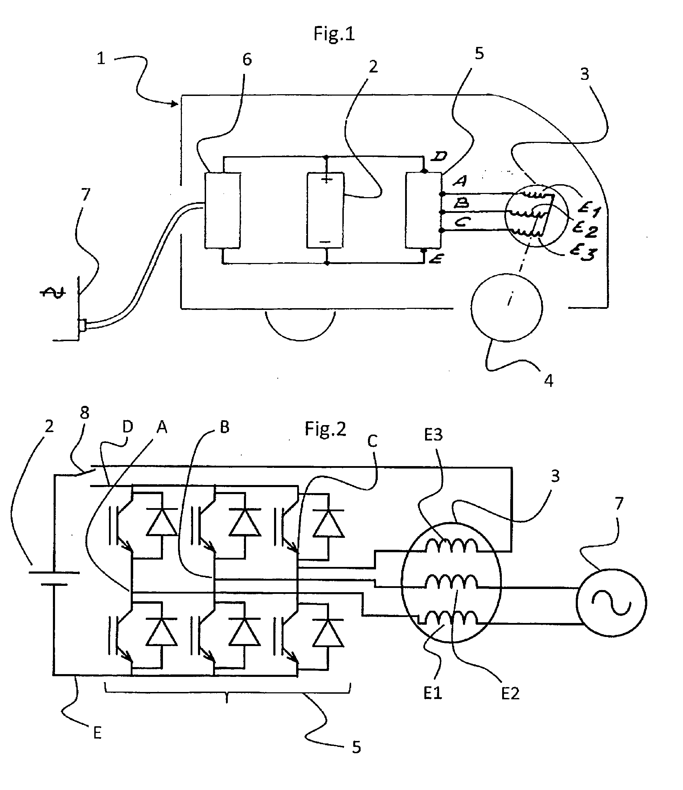

La figure 1 représente schématiquement un véhicule automobile 1 classique doté d'une motorisation électrique. Ce véhicule comprend une batterie d'accumulateurs 2 embarquée à son bord et reliée à un moteur triphasé 3 entraînant les roues 4 dans une première phase de traction du véhicule. Il comprend de plus un onduleur triphasé 5 dont la fonction est de transformer la tension continue fournie par la batterie 2 en une tension alternative nécessaire au moteur 3. L'onduleur 5 comprend deux bornes d'entrée d'alimentation D et E connectées respectivement aux pôles positif et négatif de la batterie 2, ainsi que trois bornes de sorties A, B, C connectées à trois enroulements inducteurs E1, E2, E3 du moteur 3. D'autre part, le véhicule comprend un chargeur 6, distinct des autres composants du dispositif, dont la fonction est de transformer la tension alternative fournie par une alimentation extérieure 7, en général le secteur, en une tension continue dans le but de recharger la batterie 2 dans une seconde phase de charge du véhicule.

Pour améliorer la solution classique précédente, le document FR2738411 décrit une solution dans laquelle le chargeur 6 n'est plus nécessaire, la fonction de charge étant réalisée en utilisant les composants de l'onduleur 5 et en ajoutant quelques composants dont notamment trois contacteurs. Cette solution est illustrée schématiquement sur la figure 2 dans laquelle notamment un contacteur 8 permet de modifier la configuration du circuit électrique précédent pour lui permettre de fonctionner en mode de charge de la batterie 2, le moteur 3 et l'onduleur 5 étant reliés au secteur 7 et remplissant la fonction de chargeur. Ce principe est avantageux mais il reste toutefois des difficultés pour sa mise en oeuvre optimale au sein d'un véhicule automobile.

Ainsi, un objet de l'invention est de proposer une solution qui garantit la charge électrique optimale d'une batterie reliée à un moteur par l'intermédiaire d'un onduleur au sein d'un véhicule automobile. US5581171 décrit un boîtier d'interconnexion pour véhicule automobile selon l'art antérieur.

A cet effet, l'invention repose sur un boîtier d'interconnexion pour véhicule automobile, comprenant des bornes de liaison pour une batterie, des bornes de liaison pour un onduleur, caractérisé en ce qu'il comprend des bornes de liaison pour une alimentation électrique extérieure, des sorties pour une liaison avec un moteur électrique à courant alternatif, de sorte que la connexion simultanée d'une alimentation extérieure, d'un onduleur, d'un moteur électrique et d'une batterie sur le boîtier d'interconnexion permet de mettre en oeuvre la recharge de la batterie.

Le boîtier d'interconnexion comprend au moins trois contacteurs permettant dans une première position d'offrir une configuration dans laquelle le boîtier d'interconnexion est apte à une utilisation dans un dispositif de traction d'un véhicule automobile, et dans une seconde position d'offrir une configuration dans laquelle il est apte à une utilisation dans un dispositif de recharge d'une batterie.

Le boîtier d'interconnexion comprend un contacteur permettant de relier la borne positive d'une batterie soit à la borne d'un onduleur soit à la première sortie de liaison avec un moteur électrique, et comprend deux contacteurs permettant de relier deux sorties pour une liaison avec un moteur électrique soit à la première sortie de liaison avec un moteur électrique soit de les laisser uniquement reliées aux bornes pour une alimentation extérieure.

Le contacteur permettant de relier la borne positive d'une batterie soit à la borne d'un onduleur soit à la première sortie de liaison avec un moteur électrique peut comprendre un premier contact destiné à une liaison avec la borne d'un onduleur, adapté pour les courants très élevés rencontrés en phase de traction électrique, et un second contact distinct destiné à une liaison à la première sortie de liaison avec un moteur électrique, adapté pour les faibles courants rencontrés en phase de recharge d'une batterie.

Le boîtier d'interconnexion peut comprendre au moins un contacteur bistable, comprenant un moyen annexe de blocage de son contact.

Le boîtier d'interconnexion peut comprendre au moins un contacteur présentant au moins un contact auxiliaire apte à permettre de confirmer la position de contacts dans l'une ou l'autre des positions stables.

Le boîtier d'interconnexion peut comprendre trois contacteurs reliés à un même moyen de commande, comme une bobine, pour assurer une commutation simultanée des contacteurs.

L'invention porte aussi sur un dispositif de traction pour véhicule automobile, comprenant une batterie, un moteur électrique, un onduleur, caractérisé en ce qu'il comprend un boîtier d'interconnexion tel que défini précédemment.

Ce boîtier d'interconnexion peut être directement positionné sur le moteur électrique.

Le moteur électrique peut être un moteur triphasé comprenant trois enroulements inducteurs, respectivement reliés aux trois sorties du boîtier d'interconnexion.

L'onduleur peut comprendre trois bras interrupteurs et une capacité de filtrage qui sont reliés aux trois enroulements inducteurs du moteur électrique par un connecteur triphasé.

L'invention porte aussi sur un véhicule automobile caractérisé en ce qu'il comprend un dispositif de traction tel que défini ci-dessus.

Enfin, l'invention porte aussi sur un procédé de recharge d'un dispositif de traction électrique pour véhicule automobile, caractérisé en ce qu'il comprend les étapes suivantes :
- connexion d'une alimentation électrique sur des bornes d'un boîtier d'interconnexion de véhicule automobile selon l'une des revendications 1 à 5 sur lequel est connectée la batterie ;
- commande du changement de position de trois contacteurs au sein du boîtier d'interconnexion.

Ces objets, caractéristiques et avantages de la présente invention seront exposés en détail dans la description suivante d'un mode d'exécution particulier fait à titre non-limitatif en relation avec les figures jointes parmi lesquelles :
La figure 1 représente schématiquement un véhicule automobile selon l'état de la technique.
La figure 2 représente schématiquement le circuit électrique en phase de charge de la batterie selon une solution de l'état de la technique.
La figure 3 représente schématiquement un circuit électrique selon un mode d'exécution de l'invention dans une configuration de charge de batterie.
La figure 4 représente schématiquement le même circuit électrique selon le mode d'exécution de l'invention dans une configuration de traction d'un véhicule automobile.
La figure 5 représente schématiquement une variante du mode d'exécution de l'invention.
La figure 6 représente le positionnement d'un boîtier d'interconnexion au sein d'un véhicule automobile selon un mode d'exécution de l'invention.

Comme cela a été explicité auparavant, le même dispositif électrique comprenant une batterie 2, un moteur triphasé à courant alternatif 3 et un onduleur 5, peut servir de base à la mise en oeuvre non seulement de la traction d'un véhicule automobile mais aussi de la recharge de la batterie depuis le secteur, avec l'ajout notamment de trois contacteurs particuliers. Le concept de l'invention consiste à disposer dans un même boîtier d'interconnexion les composants électriques ajoutés accessibles par les bornes de sortie nécessaires, et plus précisément dans un boîtier d'interconnexion unique qui remplit la fonction générale d'assurer la distribution et la protection électrique de la haute tension issue de la batterie, pour alimenter différents récepteurs comme l'onduleur 5 de traction, mais aussi d'autres dispositifs non représentés comme la climatisation, le chauffage, un DC/DC 14V, etc. Ce boîtier d'interconnexion pourra notamment comprendre les trois contacteurs mentionnés précédemment. L'onduleur 5 comprend, montés en parallèle entre ses bornes d'alimentation D et E, trois bras interrupteurs 18, 19, 20 et une capacité de filtrage 21. Chaque bras 18, 19, 20 comporte en série deux groupes interrupteurs hacheurs/diodes (par exemple des transistors IGBT avec leurs diodes inverses), chaque diode étant montée en inverse relativement au sens normal de conduction de chaque interrupteur. Les bornes de sorties A, B, C de l'onduleur 5 sont connectées aux points milieu des bras 18, 19, 20. Le fonctionnement de l'onduleur 5 est assuré par un circuit électronique non représenté qui commande les fermetures et ouvertures des transistors et détermine pour chaque bras 18, 19, 20 les cycles de hachage de la tension continue délivrée par la batterie 2.

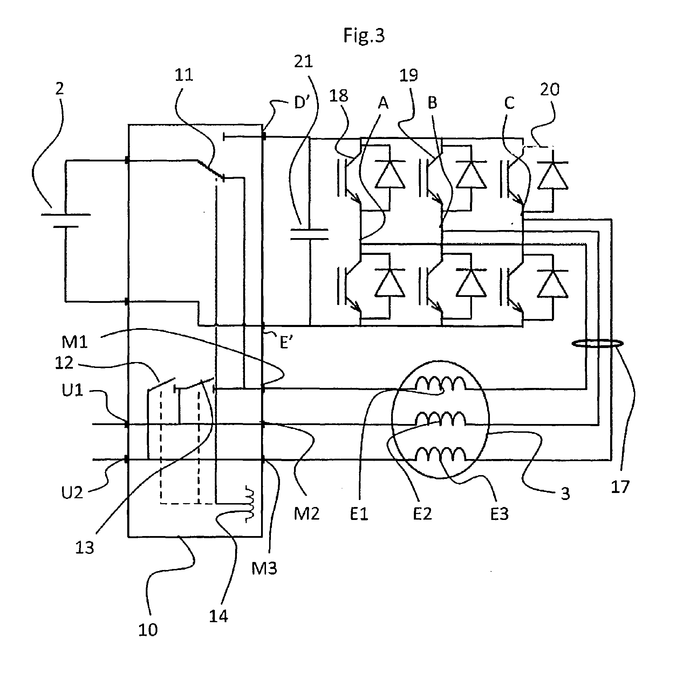

Ainsi, la figure 3 illustre un mode d'exécution de l'invention, qui repose sur un boîtier d'interconnexion qui comprend d'une part deux entrées distinctes pour une liaison avec la batterie 2 et avec le secteur 7 par les bornes d'entrée U1 et U2, et d'autre part deux bornes de sortie D', E' qui correspondent aux bornes d'entrée D, E d'alimentation de l'onduleur 5, ainsi que trois sorties M1, M2, M3 pour respectivement les trois enroulements inducteurs E1, E2, E3 du moteur 3. Trois contacteurs 11, 12, 13 sont positionnés au sein du boîtier d'interconnexion 10. Le premier contacteur permet de relier la borne positive de la batterie 2 soit à la borne D' prévue pour l'onduleur 5 soit à la sortie M1 reliée à l'inductance E1. Le second contacteur 12 et le troisième contacteur 13 permettent de relier les sorties M2 et M3 soit à la sortie M1 soit de les laisser uniquement reliés aux bornes U1 et U2. Ces trois contacteurs sont reliés à un seul moyen de commande 14, comme une bobine, pour assurer leur commutation simultanée, y compris en cas de défaillance.

Le boîtier d'interconnexion se présente sous la forme d'une enveloppe formant un boîtier étanche comprenant une interface électrique extérieure constituée de connecteurs.

Le fonctionnement du dispositif va maintenant être expliqué. La figure 3 illustre la configuration du mode de charge de la batterie 2. Le schéma électrique est en effet équivalent à celui de la figure 2. Dans ce mode de charge, le premier contacteur 11 relie la borne positive de la batterie 2 à l'enroulement E1 du moteur 3 par l'intermédiaire de la sortie M1. Le second contacteur 12 et le troisième contacteur 13 sont ouverts, permettant la liaison des deux autres enroulements E2, E3 du moteur 3 directement en contact avec les bornes U1 et U2 branchées sur le secteur, non représenté, par l'intermédiaire des sorties M2 et M3 du boîtier d'interconnexion 10.

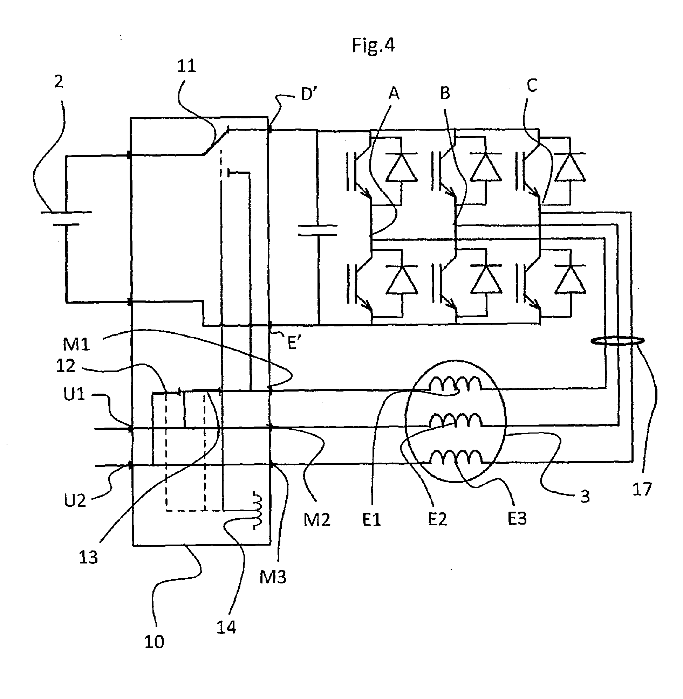

La figure 4 illustre le même dispositif en position de traction d'un véhicule. Les trois contacteurs 11, 12, 13 ont la position opposée à celle de la figure précédente, et les bornes U1 et U2 ne sont naturellement plus connectées au secteur. Dans cette configuration, les enroulements E1, E2 et E3 présentent une configuration en étoile.

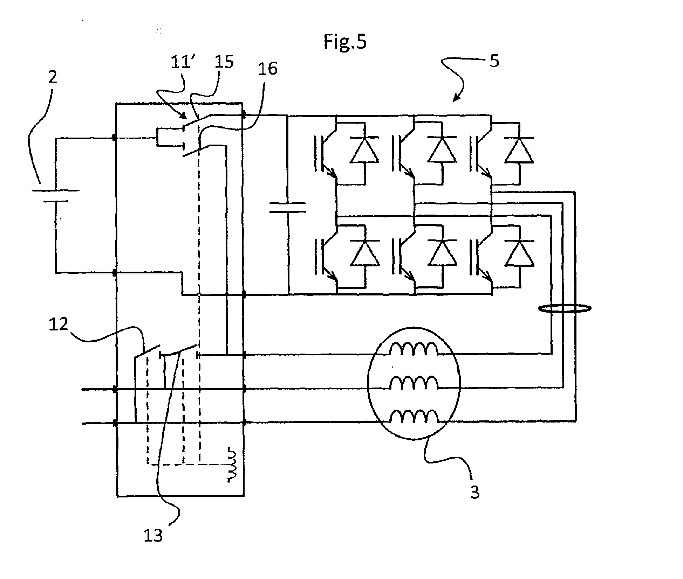

La figure 5 montre une variante de réalisation du mode d'exécution de l'invention dans laquelle le premier contacteur 11 est remplacé par un contacteur 11' présentant deux contacts distincts 15, 16. Le premier contact 15 est adapté pour les courants très élevés rencontrés en phase de traction électrique, pouvant aller jusqu'à 200 A environ, alors que le second contact 16 est adapté pour les faibles courants rencontrés en phase de recharge, de l'ordre de 25 à 30 A.

Une réalisation avantageuse consiste à utiliser un système bistable, qui maintienne les contacts dans leur position avec une grande robustesse et résistance aux vibrations, pour des raisons de sureté de fonctionnement. Pour cela, le contacteur peut disposer d'un moyen annexe permettant de bloquer les contacts dans une position donnée en évitant des ruptures de contacts par rebond dû aux vibrations. Une première réalisation consiste à ajouter à la structure classique de contacteur, de type bobine-ressort, un moyen de blocage mécanique qui est bloqué au repos et piloté de façon à débloquer les contacts avant de commander la bobine qui change l'état des contacts. Une seconde réalisation possible consiste à utiliser un actionneur électrique capable de mouvoir les contacts et de les maintenir en position, par frottements secs par exemple. Enfin, une autre réalisation consiste à disposer un contact auxiliaire qui permet de confirmer la position de l'ensemble des contacts dans l'une ou l'autre des positions stables de même que dans une position transitoire, limitant ainsi les points de contrôle. Il peut avoir deux contacts auxiliaires, solidaires mécaniquement des contacts de puissance, qui confirment la position de l'ensemble des contacts.

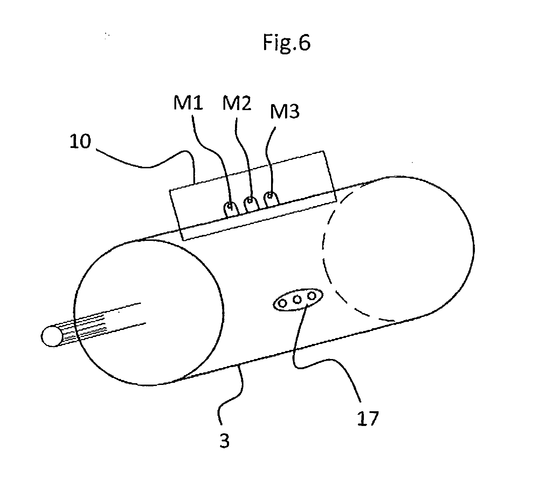

La figure 6 illustre une disposition avantageuse du boitier d'interconnexion 10 sur le moteur 3. Cette solution permet une connexion électrique du boîtier avec le moteur simplement par des jeux de barres (busbar), ce qui évite par exemple d'avoir à utiliser trois câbles supplémentaires blindés avec leurs connecteurs étanches. Parallèlement, le connecteur triphasé 17 qui relie le moteur 3 à son onduleur non représenté n'est pas modifié par rapport à une solution de l'état de la technique.

Enfin, l'invention porte aussi sur un procédé de recharge d'un dispositif de traction électrique pour véhicule automobile, caractérisé en ce qu'il comprend les étapes suivantes :
- connexion d'une alimentation électrique 7 sur des bornes U1, U2 d'un boîtier d'interconnexion de véhicule automobile décrit si-dessus ;
- commande du changement de position de trois contacteurs 11, 12, 13 au sein du boîtier d'interconnexion.

## Revendications

1. Boîtier d'interconnexion pour véhicule automobile, comprenant des bornes de liaison pour une batterie (2), des bornes de liaison (D', E') pour un onduleur (5), des bornes de liaison (U1, U2) pour une alimentation électrique extérieure (7), des sorties (M1, M2, M3) pour une liaison avec un moteur électrique (3) à courant alternatif, de sorte que la connexion simultanée d'une alimentation extérieure (7), d'un onduleur (5), d'un moteur électrique (3) et d'une batterie (2) sur le boîtier d'interconnexion permet de mettre en oeuvre la recharge de la batterie (2), ledit boîtier d'interconnexion comprenant au moins trois contacteurs (11, 12, 13) permettant dans une première position d'offrir une configuration dans laquelle le boîtier d'interconnexion est apte à une utilisation dans un dispositif de traction d'un véhicule automobile, et dans une seconde position d'offrir une configuration dans laquelle il est apte à une utilisation dans un dispositif de recharge d'une batterie (2), ledit boîtier d'interconnexion étant **caractérisé en ce qu'**il comprend un contacteur (11) permettant de relier la borne positive d'une batterie (2) soit à la borne (D) d'un onduleur (5) soit à la première sortie (M1) de liaison avec un moteur électrique (3), et **en ce qu'**il comprend deux contacteurs (12, 13) permettant de relier deux sorties (M2, M3) pour une liaison avec un moteur électrique soit à la première sortie (M1) de liaison avec un moteur électrique (3) soit de les laisser uniquement reliées aux bornes (U1, U2) pour une alimentation extérieure (7).

2. Boîtier d'interconnexion selon la revendication précédente, **caractérisé en ce que** le contacteur (11) permettant de relier la borne positive d'une batterie (2) soit à la borne (D) d'un onduleur (5) soit à la première sortie (M1) de liaison avec un moteur électrique (3) comprend un premier contact (15) destiné à une liaison avec la borne (D) d'un onduleur, adapté pour les courants très élevés rencontrés en phase de traction électrique, et un second contact distinct (16) destiné à une liaison à la première sortie (M1) de liaison avec un moteur électrique (3), adapté pour les faibles courants rencontrés en phase de recharge d'une batterie (2).

3. Boîtier d'interconnexion selon la revendication 1 ou 2, **caractérisé en ce qu'**il comprend au moins un contacteur bistable, comprenant un moyen annexe de blocage de son contact.

4. Boîtier d'interconnexion selon l'une quelconque des revendications 1 à 3, **caractérisé en ce qu'**il comprend au moins un contacteur présentant au moins un contact auxiliaire apte à permettre de confirmer la position de contacts dans l'une ou l'autre des positions stables.

5. Boîtier d'interconnexion selon l'une quelconque des revendications 1 à 4, **caractérisé en ce que** les trois contacteurs (11, 12, 13) sont reliés à un même moyen de commande (14), comme une bobine, pour assurer une commutation simultanée des contacteurs.

6. Dispositif de traction pour véhicule automobile, comprenant une batterie (2), un moteur électrique (3), un onduleur (5), **caractérisé en ce qu'**il comprend un boîtier d'interconnexion (10) selon l'une des revendications précédentes.

7. Dispositif de traction pour véhicule automobile selon la revendication précédente, **caractérisé en ce que** le boîtier d'interconnexion (10) est directement positionné sur le moteur électrique (3).

8. Dispositif de traction pour véhicule automobile selon la revendication 6 ou 7, **caractérisé en ce que** le moteur électrique (3) est un moteur triphasé comprenant trois enroulements inducteurs (E1, E2, E3), respectivement reliés aux trois sorties (M1, M2, M3) du boîtier d'interconnexion.

9. Dispositif de traction pour véhicule automobile selon la revendication précédente, **caractérisé en ce que** l'onduleur (5) comprend trois bras interrupteurs (18, 19, 20) et une capacité de filtrage (21) qui sont reliés aux trois enroulements inducteurs (E1, E2, E3) du moteur électrique (3) par un connecteur triphasé (17).

10. Véhicule automobile **caractérisé en ce qu'**il comprend un dispositif de traction selon l'une des revendications 6 à 9.

11. Procédé de recharge d'un dispositif de traction électrique pour véhicule automobile, **caractérisé en ce qu'**il comprend les étapes suivantes :
- connexion d'une alimentation électrique (7) sur des bornes (U1, U2) d'un boîtier d'interconnexion de véhicule automobile selon l'une des revendications 1 à 5, sur lequel est connectée la batterie (2) ;
- commande du changement de position de trois contacteurs (11, 12, 13) au sein du boîtier d'interconnexion.

## Claims

1. Interconnection housing for a motor vehicle, comprising connection terminals for a battery (2), connection terminals (D', E') for an inverter (5), connection terminals (U1, U2) for an external electrical power supply (7), outputs (M1, M2, M3) for a connection to an AC electric motor (3) so that the simultaneous connection of an external power supply (7), of an inverter (5), of an electric motor (3) and of a battery (2) to the interconnection housing allows the battery (2) to be recharged, said interconnection housing comprising at least three switches (11, 12, 13) which in a first position offer a configuration in which the interconnection housing can be used in a motor vehicle traction device, and in a second position offer a configuration in which it can be used in a device for recharging a battery (2), said interconnection housing being **characterized in that** it comprises a switch (11) allowing the positive terminal of a battery (2) to be connected either to the terminal (D) of an inverter (5) or to the first outlet (M1) for connection to an electric motor (3), and **in that** it comprises two switches (12, 13) allowing two outputs (M2, M3) for connection to an electric motor to be connected either to the first output (M1) for connection to an electric motor (3) or left only connected to the terminals (U1, U2) for an external power supply (7).

2. Interconnection housing according to the preceding claim, **characterized in that** the switch (11) allowing the positive terminal of a battery (2) to be connected either to the terminal (D) of an inverter (5) or to the first output (M1) for connection to an electric motor (3) comprises a first contact (15) intended for connection to the terminal (D) of an inverter, designed for the very high currents encountered in an electric traction phase, and a distinct second contact (16) intended for connection to the first output (M1) for connection to an electric motor (3), designed for the weak currents encountered during a phase of recharging a battery (2).

3. Interconnection housing according to Claim 1 or 2, **characterized in that** it comprises at least one bistable switch comprising an auxiliary means for locking its contact.

4. Interconnection housing according to any one of Claims 1 to 3, **characterized in that** it comprises at least one switch having at least one auxiliary contact capable of confirming the position of the contacts in one or other of the stable positions.

5. Interconnection housing according to any one of Claims 1 to 4, **characterized in that** the three switches (11, 12, 13) are connected to one and the same control means (14), such as a coil, to ensure simultaneous switching of the switches.

6. Traction device for a motor vehicle, comprising a battery (2), an electric motor (3), an inverter (5), **characterized in that** it comprises an interconnection housing (10) according to one of the preceding claims.

7. Traction device for a motor vehicle according to the preceding claim, **characterized in that** the interconnection housing (10) is positioned directly on the electric motor (3).

8. Traction device for a motor vehicle according to Claim 6 or 7, **characterized in that** the electric motor (3) is a three-phase motor comprising three induction windings (E1, E2, E3) respectively connected to the three outputs (M1, M2, M3) of the interconnection housing.

9. Traction device for a motor vehicle according to the preceding claim, **characterized in that** the inverter (5) comprises three switching arms (18, 19, 20) and a filtering capacitor (21) which are connected to the three induction windings (E1, E2, E3) of the electric motor (3) by a three-phase connector (17).

10. Motor vehicle **characterized in that** it comprises a traction device according to one of Claims 6 to 9.

11. Method of recharging an electric traction device for a motor vehicle, **characterized in that** it comprises the following steps:
- connecting an electrical power supply (7) to the terminals (U1, U2) of a motor vehicle interconnection housing according to one of Claims 1 to 5, to which the battery (2) is connected;
- commanding the change of position of three switches (11, 12, 13) within the interconnection housing

## Patentansprüche

1. Anschlussgehäuse für ein Kraftfahrzeug, das Verbindungsklemmen für eine Batterie (2), Verbindungsklemmen (D', E') für einen Wechselrichter (5), Verbindungsklemmen (U1, U2) für eine externe Stromversorgung (7), Ausgänge (M1, M2, M3) für eine Verbindung mit einem elektrischen Wechselstrommotor (3) enthält, so dass der gleichzeitige Anschluss einer externen Versorgung (7), eines Wechselrichters (5), eines Elektromotors (3) und einer Batterie (2) an das Anschlussgehäuse es ermöglicht, die Wiederaufladung der Batterie (2) durchzuführen, wobei das Anschlussgehäuse mindestens drei Kontaktschalter (11, 12, 13) enthält, die es in einer ersten Stellung erlauben, eine Konfiguration anzubieten, in der das Anschlussgehäuse für eine Verwendung in einer Antriebsvorrichtung eines Kraftfahrzeugs geeignet ist, und in einer zweiten Stellung erlauben, eine Konfiguration anzubieten, in der es für eine Verwendung in einer Wiederaufladevorrichtung einer Batterie (2) geeignet ist, wobei das Anschlussgehäuse **dadurch gekennzeichnet ist, dass** es einen Kontaktschalter (11) enthält, der es ermöglicht, die positive Klemme einer Batterie (2) entweder mit der Klemme (D) eines Wechselrichters (5) oder mit dem ersten Ausgang (M1) zur Verbindung mit einem Elektromotor (3) zu verbinden, und dass es zwei Kontaktschalter (12, 13) enthält, die es ermöglichen, zwei Ausgänge (M2, M3) für eine Verbindung mit einem Elektromotor entweder mit dem ersten Ausgang (M1) zur Verbindung mit einem Elektromotor (3) zu verbinden, oder sie nur mit den Klemmen (U1, U2) für eine externe Versorgung (7) verbunden zu lassen.

2. Anschlussgehäuse nach dem vorhergehenden Anspruch, **dadurch gekennzeichnet, dass** der Kontaktschalter (11), der es ermöglicht, die positive Klemme einer Batterie (2) entweder mit der Klemme (D) eines Wechselrichters (5) oder mit dem ersten Ausgang (M1) zur Verbindung mit einem Elektromotor (3) zu verbinden, einen für eine Verbindung mit der Klemme (D) eines Wechselrichters bestimmten ersten Kontakt (15), der für die in der elektrischen Antriebsphase angetroffenen sehr hohen Ströme geeignet ist, und eine zweiten, für eine Verbindung mit dem ersten Ausgang (M1) zur Verbindung mit einem Elektromotor (3) bestimmten, unterschiedlichen Kontakt (16) enthält, der für die schwachen Ströme geeignet ist, die in einer Wiederaufladephase einer Batterie (2) angetroffen werden.

3. Anschlussgehäuse nach Anspruch 1 oder 2, **dadurch gekennzeichnet, dass** es mindestens einen bistabilen Kontaktschalter enthält, der eine angefügte Einrichtung zur Blockierung seines Kontakts enthält.

4. Anschlussgehäuse nach einem der Ansprüche 1 bis 3, **dadurch gekennzeichnet, dass** es mindestens einen Kontaktschalter enthält, der mindestens einen Hilfskontakt aufweist, der es ermöglicht, die Stellung von Kontakten in der einen oder anderen der stabilen Stellungen zu bestätigen.

5. Anschlussgehäuse nach einem der Ansprüche 1 bis 4, **dadurch gekennzeichnet, dass** die drei Kontaktschalter (11, 12, 13) mit der gleichen Steuereinrichtung (14) verbunden sind, wie einer Spule, um eine gleichzeitige Umschaltung der Kontaktschalter zu gewährleisten.

6. Antriebsvorrichtung für ein Kraftfahrzeug, die eine Batterie (2), einen Elektromotor (3), einen Wechselrichter (5) aufweist, **dadurch gekennzeichnet, dass** sie ein Anschlussgehäuse (10) nach einem der vorhergehenden Ansprüche aufweist.

7. Antriebsvorrichtung für ein Kraftfahrzeug nach dem vorhergehenden Anspruch, **dadurch gekennzeichnet, dass** das Anschlussgehäuse (10) direkt auf dem Elektromotor (3) positioniert ist.

8. Antriebsvorrichtung nach Anspruch 6 oder 7, **dadurch gekennzeichnet, dass** der Elektromotor (3) ein Dreiphasenmotor mit drei Induktionswicklungen (E1, E2, E3) ist, die je mit den drei Ausgängen (M1, M2, M3) des Anschlussgehäuses verbunden sind.

9. Antriebsvorrichtung für ein Kraftfahrzeug nach dem vorhergehenden Anspruch, **dadurch gekennzeichnet, dass** der Wechselrichter (5) drei Unterbrecherarme (18, 19, 20) und einen Filterkondensator (21) enthält, die mit den drei Induktionswicklungen (E1, E2, E3) des Elektromotors (3) durch einen Dreiphasenverbinder (17) verbunden sind.

10. Kraftfahrzeug, **dadurch gekennzeichnet, dass** es eine Antriebsvorrichtung nach einem der Ansprüche 6 bis 9 aufweist.

11. Verfahren zum Wiederaufladen einer elektrischen Antriebsvorrichtung für ein Kraftfahrzeug, **dadurch gekennzeichnet, dass** es die folgenden Schritte enthält:
- Verbindung einer Stromversorgung (7) mit Klemmen (U1, U2) eines Anschlussgehäuse eines Kraftfahrzeugs nach einem der Ansprüche 1 bis 5, mit dem die Batterie (2) verbunden ist;
- Steuerung der Stellungsänderung von drei Kontaktschaltern (11, 12, 13) innerhalb des Anschlussgehäuses.
